# EUROPEAN PATENT APPLICATION

(11) **EP 0 864 612 A1**
(43) Date of publication of application: **16.09.1998**
(21) Application number: 97919057.6
(22) Date of filing: 25.09.1997
(51) Int. Cl.: C08L 101/00

(54) **COMPOSITE MATERIALS CONSISTING OF THERMOPLASTIC AND LIGNINE, AND PRODUCTION PROCESS**

(30) Priority: 25.09.1996 ES 9602024
(71) Applicant: UNIVERSIDAD DE OVIEDO, 33003 Oviedo (ES)
(72) Inventor: GONZALEZ SANCHEZ, Carlos, E-33006 Oviedo (ES); EXPOSITO ALVAREZ, Luis Angel, E-33684 Caborana (ES); COCA PRADOS, José, E-33006 Oviedo (ES)
(74) Representative: Ibanez, José Francisco
(86) International application number: ES9700236
(87) International publication number: WO9813424

(57) **Abstract**

Process and formulations for the production of composite materials consisting of thermoplastic and lignine, obtained in a thermokinetic mixer in minimum thermal degradation conditions which ensure an adequate dispersion of the lignine in the thermoplastic matrix and provide materials of which the physical, mechanical and thermal properties make them appropriate for various applications. The process is carried out in two steps: the first step comprises the heating and melting of the thermoplastic material; in the second step the polymer is mixed with the lignine.

## Description

The invention relates to a process for obtaining thermoplastic/lignin composite materials in minimum thermal degradation conditions. Also particular formulations of composites thus obtained are described.

During the chemical processes for the production of cellulose pulp, cellulose fibers are debonded by means of solubilization of the lignin that bonds them together. The cellulose fibers, that will be drawn to further bleaching, and the black liquors, that mainly contain the lignin in a soluble form, are obtained as a result of the process.

Though the main part of the black liquors generated in the chemical pulping processes are burnt in the own plant, thus producing energy and recovering chemical products, a significant quantity (the diluted black liquors and those coming from leaks and overflowing) is not usually recovered and constitutes a substantial environmental pollution problem due to several reasons: remarkable black colour, foam formation, high BOD₅, intense and foul odour.

That pollutant feature makes necessary the development of recovering methods for these black liquors. The main component of black liquors from kraft process (the most extended process for the obtention of chemical pulps) is degraded lignin under the form of sodium lignates. This lignin may be recovered by precipitation in acid media, using CO₂ or mineral acids *(Alen, R., Patja, P., Sjöström, E., "Carbon dioxide precipitation of lignin from pine kraft black liquor". Tappi, 62, 11, 108-110, 1979).*

Due to the high volumes of waste lignin produced in the manufacture of cellulose pulps, numerous applications have been described for lignin, in particular as agglomerant, dispersing agent, tensioactive agent, adsorbent and fertilizer. Furthermore, lignin has several applications in the polymer field, i.e. as reinforcement in styrene-butadiene and neoprene rubbers, as copolymer in phenol-formaldehyde and urea-formaldehyde resins, and in the manufacture of polyurethanes *(Garcia, F., Martin, F., Rodriguez, J.J., "Posibilidades de aprovechamiento de la lignina en la industria quimica". Ing. Quím., 10, 249-254, 1984).*

Within the polymer field, lignin has applications on elastomers (acting as reinforcing filler) and on thermosets (acting as monomer). The applications of lignin in thermoplastics have been less studied. It has been used as additive, at low percentages, in the manufacture of polypropylene films *(Valeria, D., Bozena, K., "Lignin utilization in polyolefin blends" in "Lignocellulosics: Science, Technology, Development and Use". Kennedy, J. F., Phillips, G. O., Williams, P.A., Eds. Ellis Horwood, New York, 1992).*

A first object of the present invention is a process for the obtention of composite materials consisting of thermoplastic and lignin in which lignin is present in high percentages. By the process of the invention it is solved the problem arising from the relatively reduced thermal stability of lignin that causes that, at the temperatures customarily used in the processing of this type of composite materials, lignin is degraded until reaching a complete combustion.

A second object of the invention are formulations for composite materials thermoplastic/lignin in which lignin is present in high percentages and that exhibit mechanical and thermal properties that make them suitable for industrial and commercial applications.

A third object of the invention is the obtention of composite materials having application in several industrial fields, such as automotive (i.e. door panels, dashboards), building (i.e. floors, partitions, doors), indoor and outdoor furniture, or manufacture of various containers and packaging articles.

Use of lignin as a filler in thermoplastic polymers provides the following advantages:
- The cost of commonly used inorganic fillers has been increasing, which significantly affects on the costs of composites in which they are included. Use of cheap fillers, such as lignin, is very desirable provided the properties of the materials obtained through inorganic fillers may be maintained or even improved.
- Degradation temperature of lignin is about 180-190°C, and therefore by using the adequate technique it is possible the processing of lignin with those thermoplastics having a melting temperature under said degradation temperature, in order to obtain composite materials thermoplastic/lignin.
- Surface tension of lignin (about 65 mN/m) is substantially lower than that of inorganic fillers commonly used with thermoplastics, thus offering a higher compatibility with non-polar polymers.
- Lignin density (1.4 g/cm³) is substantially lower than that of inorganic fillers (2.5 g/cm³ for glass fiber), hence the composite materials obtained by using lignin as filler are lighter than those containing inorganic fillers, what results advantageous in applications like transportation field.
- Lignin is a readily available renewable raw material, due to the high volume of chemical pulps produced and the constant growth connected to the fact that the economic development implies an increase in paper consumption. For these reasons, and for its residual origin, lignin may be considered as a relatively cheap filler.

Use of lignin as a filler has applications in the field of recycling plastic wastes. The resulting improved properties, such as stiffness and dimensional stability of the materials in which lignin is present as filler, may contribute to palliate the unavoidable loss of properties that takes place during the mechanical recycling of thermoplastics. At the same time, lignin can be useful as stabilizer due to its absorptive capacity of the ultraviolet radiation, thus avoiding the need of stabilization of the recycled polymer. Furthermore, since lignin is a biodegradable polymer it may give cause for an increase in the biodegradability of the composite material *(Valeria et a!. op. cit.).*

### State of the art.

Addition of inorganic fillers, either as charges or as reinforcing agents, is a customary practice in the utilization of thermoplastics for several applications, i.e. manufacturing of automobile parts, containers, furniture, building materials, etc. Rigid fillers give rise to a higher stiffness of the thermoplastic, lower shrinkage during molding process and higher dimensional stability *(Maiti, S.N., Mahapatro, P. K., "Mechanical properties of nickel-powder filled polypropylene composites". Polym. Composites 13, 47-52, 1992).*

The effects produced by the filler on the polymer depend to a large extent on its particular shape, so that fibrous or flattened fillers with a great difference in the three dimensions (high length/diameter ratio) give rise to a reinforcing effect on the polymer with wide improvements in properties like tensile strength. Unlike said fillers, that may be considered as reinforcements, the fillers with low length/diameter ratio (particulate fillers) do not tend to improve the tensile strength of the material and the advantage over fibrous fillers resides in a lower cost and the fact that the anisotropy, present in the composites with short fibers, due to fiber orientation is avoided. *(McCullough, R.L., "Influence of microstructure on the thermoelastic and transport properties of particulate and short-fiber composites" in "Mechanics of composite materials. Recent advances" . Hashin, Z., Herakovich, C. T., Eds. Pergamon Press, London, 1983).*

Lignocellulosic fillers, such as sawdust or cellulose fibers have been used for many years as fillers in thermosets, mainly due to their low cost and low density *(Doss, N.L., Elawady, M.M., Elawady, N.Y., Mansour, S.H., "Impregnation of white pine wood with unsaturated polyesters to produce wood-plastic combinations". J. Appl. Polym. Sci., 42, 2589-2594, 1991).* The use of this type of fillers in thermoplastic materials offers a great interest in many applications due to the fact that, while maintaining the aforementioned advantages, the composite materials may be processed in the same way than unfilled thermoplastics. Moreover, this type of fillers gives rise to a lower abrasion of the processing equipment than do the inorganic fillers. Because of that, there have been accomplished a great number of projects in this field using all type of lignocellulosic fillers, pretreated to a higher or lower extent, and using the most commercially available polymers as matrix.

The obtention of composites using thermoplastic polymers is carried out by means of a working process at moderately high temperatures (between 150 and 250°C) of the different components, to produce a homogeneous material, but constituted by differentiated phases. The close mixture of matrix and filler implies the melting of the polymeric matrix and the dispersion of the filler into the matrix. Mechanical properties of the composites are decisively affected by the dispersion degree of the filler into the matrix.

Traditionally, a two-roll mill has been used by the plastic transforming industry to incorporate different types of charges, additives and colorants to thermoplastic polymers. Through the appropriate selection of temperatures and rotation speeds, the polymer is adhered to one of the rollers and the fillers, additives and colorants are added to the melted polymer while passing through the rollers.

The two-roll mill has been substituted in many operations by an extruder-blender in which the mixing zone of the screw has been increased. This system has the advantage of allowing an easier continuous operation and the possibility of using inert atmospheres or vacuum.

Internal mixers, such as kneading machines, masticators and blade mixers, are other devices of common use. These devices, widely used in the processing of the elastomers, are not so often used with thermoplastics. Among this type of devices the thermokinetic mixer may be emphasized. This mixer consists of a mixing chamber in which several blades rotate at high speed (up to 6500 rpm) so that heat is not provided from external electrical resistances, but by the internal shear of the material in the mixing chamber produced by the high speed of the blades.

Equipments used in the processing of composites with lignocellulosic fillers are those commonly used in the mixture of thermoplastics with all type of charges, pigments and additives, for example the two-roll mill, extruders and, to a lower extent, the thermokinetic mixer.

The most used equipment is the traditional roller mill *(Sain, M.M., Kokta, B. V., Imbert, C., "Structure-property relationships of wood fiber-filled polypropylene composite", Polym. Plast Technol. Eng., 33, 1, 89-104 1994),* followed by the extruder *(Myers, G.E., Chahyadi, I.S., González, C., Coberly, C.A., Ermer, D.S., "Wood flour and polypropylene or high density polyethylene composites: Influence of maleated polypropylene concentration and extrusion temperature on properties". Intern. J. Polymeric Mater., 15, 171-186, 1991)* and the thermokinetic mixer *(González. C., Clemons, C. H., Myers, G.E., Harten, T.M., "Effect of several ingredient variables on mechanical properties of wood fiber polyolefin composites blended in a thermokinetic mixer" in "Material interactions relevant to the recycling of wood-based materials". Rowell, R.M., Laufemberg, T.L. and Rowell, J. K. Eds*. *MRS Symp. Proc. Series, 1992).*

Use of a thermokinetic mixer allows to work with the softened polymer at temperatures not much higher than its melting temperature, while obtaining a good dispersion. In this way, by using a thermokinetic mixer is possible, for example, the processing of thermoplastic/sawdust composites. Nevertheless, lignin is a more thermally sensitive filler than the lignocellulosic ones, commonly used as fillers in thermoplastic/filler composites. Though the thermokinetic mixer generates a high turbulence into the molten material, avoiding the rise of temperature gradients and the formation of hot spots, which is beneficial when thermally sensitive materials, like lignin, are processed, the thermal degradation that suffers the lignin during processing with a thermoplastic in a thermokinetic mixer is excessive, and even total combustion of lignin is achieved. This fact makes completely impossible the processing of thermoplastic/lignin composites.

According to the invention, the use of a processing method in two stages solves the aforementioned problems, since allows to reduce to a minimum the time that lignin is submitted to high temperature and makes possible the processing of the material at temperatures that are even lower than the melting temperature of the thermoplastic matrix. In this way, a composite material with a low thermal degradation level and acceptable dispersion of lignin in the thermoplastic matrix may be obtained.

The properties of thermoplastic/filler composites depend on the shape of the filler particles. Another important factor affecting the material properties is the nature of the interfacial adhesion between the polymer and the filler surface. The best properties are obtained when a strong interfacial adhesion between both components is achieved, thus allowing an adequate load transfer between them.

Cellulosic fillers like α-cellulose are characterized by a high polar surface due to the high number of hydroxyl groups present in the cellulose. That makes this type of fillers incompatible with non-polar thermoplastics like polyolefins. The lignin has a lower number of polar functional groups, but maintains a relatively high polarity. In this way, lignocellulosic fillers, as sawdust, are less polar than the cellulose fibers. Also, lignin isolated from black liquors is less polar than the two aforementioned. Nevertheless, the polarity is still higher than that of non-polar thermoplastics which makes it incompatible with them.

With the aim of improving the compatibility, and then improve the properties of thermoplastic/lignocellulosic filled composites, numerous coupling agents have been used, which, either by means of chemical union or by physical interactions, produce a stronger interfacial union between the polymer and the filler surface.

Among the coupling agents customarily used in composites with lignocellulosic fillers, the following may be mentioned:
- PMPPIC (poly-methylen-polyphenylisocyanate)
- Phthalic anhydride
- Maleated polypropylene
- Organic acids: stearic, abietic and linoleic
- Anhydrides: maleic, stearic and trifluoroacetic.

The PMPPIC has been used as coupling agent with good results in composites of polystyrene and thermomechanical pulp fibers *(Maldas, D., Kokta, B. V., "Effects of coating treatments on the mechanical behavior of wood-fiber-filled polystyrene composites. I. Use of polyethylene and isocyanate as coating components". J. Appl. Polym. Sci., 40, 917-928, 1990),* in composites of high density polyethylene and sawdust *(Raj. R.G., Kokta, B. V, Daneault, C., "Wood flour as a low-cost reinforcing filler for polyethylene: studies on mechanical properties". J. Mater. Sci., 25, 1851-1855, 1990)* and in composites with linear low density polyethylene and chemithermomechanical pulp fibers *(Raj, R.G., Kokta, B. V., Maldas, D., Daneault, C., "Use of wood fibers in thermoplastics, VII. The effect of coupling agents in polyethylene-wood fiber composites". J. Appl. Polym. Sci. 37, 1089-1103, 1989).*

The phthalic anhydride has been used as coupling agent for composites made from polystyrene and chemithermomechanical fibers and sawdust *(Maldas, D., Kokta, B. V., "Influence of phthalic anhydride as a coupling agent on the mechanical behavior of wood fiber-polystyrene composites". J. Appl. Polym. Sci., 41, 185-194, 1990)*. It has been proved that PMPPIC gives better results than phthalic anhydride due to the fact that the former is a macromolecular compound and it is able to provide a stronger linkage with the polymer.

The maleated polypropylene has given good results as coupling agent when used for composites with polypropylene and sawdust and in composites with polyethylene and sawdust *(Myers, G. Y., Chahyadi, I.S., González, C., Coberly, C.A., Ermer, D.S., "Wood flour and polypropylene or high density polyethylene composites: Influence of maleated polypropylene concentration and extrusion temperature on properties". Intern. J. Polymeric Mater., 15, 171-186, 1991).*

Organic acids (stearic, abietic and linoleic) and anhydrides (maleic, stearic and trifluoroacetic) have been used to improve adhesion in composites with PVC and chemithermomechanical pulp fibers and in composites of PVC and sawdust *(Kokta, B. V., Maldas, D., Daneault, C., Béland, P., "Composites of polyvinyl chloride and wood fibers. Part II: Effect of chemical treatment". Polym. Composites, 11, 2, 84-89, 1990)*.

The properties of thermoplastic/lignin composites depend basically on the relative content of both components in the composite material, so that, when the lignin percentage in the material is increased, the values of some properties (tensile and flexural elastic modulus, heat deflection temperature, VICAT temperature, hardness) are increased with regard to the unfilled polymer, whereas other property values are reduced (tensile strength, impact energy). The polymer-filler interfacial adhesion improvement permits to avoid, to a large extent, the reduction in these last properties and, at the same time, provides a further increasing of the values of the properties already favoured by the presence of lignin as filler.

According to the invention series of formulations that permit to obtain composites that encompass a wide range of properties through the adequate selection of lignin percentage, type of coupling agent and its percentage in the composite are described.

### Brief description of the invention.

It is a first object of the invention a process for the obtention of thermoplastic/lignin composite materials through a process of kneaded-plastificacion of the raw materials in a thermokinetic mixer of rapid heating by shear friction, which is accomplished in two stages:
1.- Heating and melting of the thermoplastic
2.- Mixing of the polymer with the lignin.

The raw materials used are original or recycled thermoplastic, lignin obtained from waste black liquors of pulping processes, and the corresponding additives (coupling agents, matrix modifiers, etc.). The process provides the obtention of thermoplastic/lignin composites in a thermokinetic mixer, as well as molded parts or articles.

It is another object of the present invention to provide series of formulations to produce thermoplastic/lignin composites, with maleated polypropylene percentages lower than 10% by weight, whose good physical, mechanical and thermal properties, make them useful for a wide range of industrial and commercial applications in which customarily are used similar composites, but with inorganic fillers such as talc or mica. With these formulations, thermoplastic/lignin composites, cheaper, lighter and less abrasive for the processing equipment than the inorganic-filled composites, are obtained.

### Description of the figures.

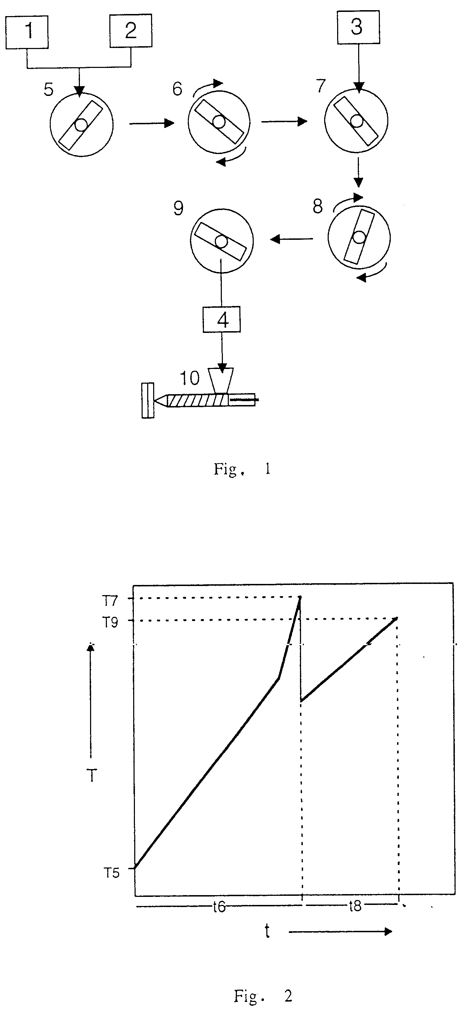

Figure 1 is a block diagram of the two-stages process for obtaining thermoplastic/lignin composites of the invention. The numerical references designate the following elements: 1 thermoplastic polymer, 2 additives, 3 lignin, 4 composite material, 5 load of thermoplastic and the corresponding additives, 6 heating and melting stage of the polymer, 7 load of the lignin used as filler, 8 mixing stage, 9 discharge of the composite material, 10 molding stage.

Figure 2 shows the variation of temperature during processing of thermoplastic/lignin composites. The references mean: T5 initial temperature of raw materials, T7 temperature of the polymer at the end of the heating stage, T9 temperature of composite at the point of discharge, t6 time corresponding to the heating stage of the polymer, t8 time corresponding to the mixing stage.

### Detailed description of the invention.

The process for the obtention of thermoplastic/lignin composites is described with reference to Figures 1 and 2. The thermoplastic used as matrix (1) together with the additives (2), i.e. coupling agents and for this type of fillers preferably from the type of standard polymers, such as maleated polypropylene of high molecular weight and acidity, are jointly introduced in the thermokinetic mixer chamber (5) and are submitted to a preheating stage until softening or melting of the polymer (6). Previously, both the polymer and the coupling agent have been dried in order to eliminate moisture, which catalyze the degradation reactions of the composite during its processing. The polymer preheating stage (6) is carried out using a rotor blade speed relatively high with the aim of minimizing the time necessary to achieve the required temperature, which must be higher than the melting temperature of the thermoplastic used and lower than 200°C, in order to avoid an excessive heating of the lignin when is brought in contact with the polymer.

Once the polymer is at the corresponding temperature, the thermokinetic mixer blades are stopped and the lignin (3) is poured into the mixing chamber (7). Lignin, as in the case of polymer and coupling agent, has been previously dried to eliminate moisture, which, given the polarity of lignin, is usually high. The time employed in introducing the lignin into the chamber once the blades have been stopped and for running again the blades must not be long, preferably shorter than 10 seconds in order to avoid the cooling and solidification of the polymer in the chamber that would make impossible to run the rotor blades again. The mixing stage (8) must be carried out using a rotor blade speed lower than that used in the preheating stage in order to provide an adequate mixing time that permit achieving a good dispersion without an excessive increase of temperature. The discharge temperature of the polymerlignin mixture should not be higher than melting temperature of the polymer; it is recommendable not surpassing 160-170° C in order to minimize the thermal degradation of lignin.

Once the discharge temperature is reached, the material is ejected from the mixing chamber (9) as a mass of molten material (4) that may be submitted directly to molding process (i.e. compression molding) or to a process that permit to obtain the cooled material in such conditions that may be molded (i.e. thermoforming) or to grinding to obtain pellets of the adequate size for another molding process (i.e., injection molding).

Control of temperature into the mixing chamber is of the major importance during processing, due to the low thermal stability of the lignin used as filler. In Figure 2 the qualitative variation of the temperature of the material in the thermokinetic mixer chamber during the two-stages processing is shown. Specific values of times and temperatures depend on the polymer used as matrix. Initially, the material is at room temperature T5. When the preheating of the polymer begins, the temperature increases owing to the shear friction of the material with the blades and the chamber walls. The heating rate is maintained until the softening temperature of the polymer is reached. At this point, the polymer is a molten mass whereupon the shear is higher and the heating rate too, as can be observed in Figure 2. Preheating stage continues until temperature T7 is reached. At this time, the mixer charge door is opened and the cold lignin is added. As a consequence a reduction of temperature is produced and, therefore, at the starting of the mixing stage the temperature is lower than T7. The mixing stage continues until temperature T9 is reached and, at this time, the material is discharged from the chamber.

The composite material obtained through this process is homogeneous and the thermal degradation of the lignin used as filler and of the own composite is minimal. This material can be submitted thereinafter to molding by any of the common molding methods (i.e. compression, thermoforming or injection) to obtain articles or molded pieces.

Formulations of the thermoplastic/lignin composites object of the invention incorporate two main components: the thermoplastic polymer (polypropylene or high density polyethylene) and the lignin. Some of the composites also include coupling agents in the formulation that permit to improve their properties. The coupling agents used have been modified polypropylenes (low or medium molecular weigh graft copolymers of maleic anhydride and polypropylene), marketed by Eastman Chemical Co. under the commercial names *E-43*^{*(R)*} and *G-3002*^{*(R)*}.

The adequate variation of lignin percentages in the composite, the type of coupling agent *(E-43*^{*(R)*} or *G-3002*^{*(R)*}*)* and its percentages in the composite, allow to obtain a wide range of physical, mechanical and thermal properties for the polypropylene/lignin and high density polyethylene/lignin composites, as illustrated by the following examples.

The examples give an indication of how polyolefin/lignin composites with a variety of physical, mechanical and thermal properties may be obtained. Nevertheless, another similar formulations with percentages of coupling agent and lignin between the limits of the invention are possible and give materials with properties adequate to each application.

### Example 1: Polypropylene/25% lignin composite material.

In a pilot plant thermokinetic mixer equipped with 1 litter cylindrical mixing chamber and 4 mixing blades, 100 g of polypropylene, previously dried during 4 hours at 105°C, are introduced. Using a rotor blade speed of 5500 rpm the polymer is preheated until a temperature of 180°C is reached. At this point the rotor blades of the thermokinetic mixer are stopped and 33.3 g of kraft lignin, previously dried during 4 hours at 105°C, are then added. This operation has to be accomplished in a time shorter than 10 s to avoid solidification of the polymer in the mixing chamber. The thermokinetic mixer is turned on again at a rotor blade speed of 3700 rpm until a temperature of 160°C is reached and then the material is discharged. The obtained softened mass is submitted to a calendering process so that the material solidify in a less than 5 mm thick sheet that permits its subsequent grinding in a blade mill to obtain pellets of a size ranging from 0 to 8 mm which make them capable of injection molding. After injection molding at a temperature of 200° C, at an injection pressure of 49 MPa and with a cooling time of 25 s in a mold at 35° C, a material with the following properties is obtained:
- Tensile modulus of elasticity:: 1.04 GPa
- Tensile strength:: 23.7 MPa
- Flexural modulus of elasticity:: 1.91 GPa
- Notched impact energy:: 23.4 J/m
- Heat deflection temperature:: 61° C
- Softening temperature VICAT:: 108° C
- Rockwell hardness:: HRL53
- Density:: 0.994 g/cm³.

### Example 2: Polypropylene/55% lignin composite material.

By following the same procedure described in Example 1, 122.2 g of kraft lignin are added instead of 33.3 g. After injection molding at a temperature of 200° C, at an injection pressure of 87 MPa and 25 s of cooling time in a mold at 35° C, a material with the following main properties is obtained:
- Tensile modulus of elasticity:: 1.34 GPa
- Tensile strength:: 16.4 MPa
- Flexural modulus of elasticity:: 2.90 GPa
- Notched impact energy:: 28.9 J/m
- Heat deflection temperature:: 67° C
- Softening temperature VICAT:: 113° C
- Rockwell hardness:: HRL59
- Density:: 1.114 g/cm³.

### Example 3: Polypropylene/25% lignin/1.5% E-43^{(R)} composite material.

By following the same procedure described in Example 1, 98 g of polypropylene and 2 g of *E-43*^{*(R)*} are added instead of 100 g of polypropylene. After injection molding at a temperature of 200° C, at an injection pressure of 51 MPa and 25 s of cooling time in a mold at 35° C, a material with the following main properties is obtained:
- Tensile modulus of elasticity:: 1.02 GPa
- Tensile strength:: 27.9 MPa
- Flexural modulus of elasticity:: 1.98 GPa
- Notched impact energy:: 23.4 J/m
- Heat deflection temperature:: 58° C
- Softening temperature VICAT:: 109° C
- Rockwell hardness:: HRL59
- Density:: 0.994 g/cm³.

### Example 4: Polypropylene/55% lignin/1.5% E-43^{(R)} composite material.

By following the same procedure described in Example 1, 96.7 g of polypropylene and 3.3 g of *E-43*^{*(R)*} are added instead of 100 g of polypropylene, and 122.2 g of lignin instead of 33.3 g. After injection molding at a temperature of 200° C, at an injection pressure of 87 MPa and 25 s of cooling time in a mold at 35° C, a material with the following main properties is obtained:
- Tensile modulus of elasticity:: 1.40 GPa
- Tensile strength:: 21.9 MPa
- Flexural modulus of elasticity:: 2.92 GPa
- Notched impact energy:: 38.0 J/m
- Heat deflection temperature:: 73° C
- Softening temperature VICAT:: 116° C
- Rockwell hardness:: HRL74
- Density:: 1.114 g/cm³.

### Example 5: Polypropylene/25% lignin/1.5% G-3002^{(R}⁾ composite material.

By following the same procedure described in Example 1, 98 g of polypropylene and 2 g of *G-3002*^{*(R)*} are added instead of 100 g of polypropylene. After injection molding at a temperature of 200° C, at an injection pressure of 52 MPa and 25 s of cooling time in a mold at 35° C, a material with the following main properties is obtained:
- Tensile modulus of elasticity:: 1.07 GPa
- Tensile strength:: 29.0 MPa
- Flexural modulus of elasticity:: 1.99 GPa
- Notched impact energy:: 23.2 J/m
- Heat deflection temperature:: 63° C
- Softening temperature VICAT:: 114° C
- Rockwell hardness:: HRL64
- Density:: 0.994 g/cm³.

### Example 6: Polypropylene/55% lignin/1.5% G-3002^{(R)} composite material.

By following the same procedure described in Example 1, 96.7 g of polypropylene and 3.3 g of *G-3002*^{*(R)*} are added instead of 100 g of polypropylene, and 122.2 g of lignin instead of 33.3 g. After injection molding at a temperature of 200° C, at an injection pressure of 91 MPa and 25 s of cooling time in a mold at 35° C, a material with the following main properties is obtained:
- Tensile modulus of elasticity:: 1.43 GPa
- Tensile strength:: 26.7 MPa
- Flexural modulus of elasticity:: 3.06 GPa
- Flexural strength:: 48.7 MPa
- Notched impact energy:: 14.5 J/m
- Heat deflection temperature:: 90° C
- Softening temperature VICAT:: 128° C
- Rockwell hardness:: HRL79
- Density:: 1.114 g/cm³.

### Example 7: High density polyethylene/25% lignin composite material.

In a pilot plant thermokinetic mixer equipped with 1 litter cylindrical mixing chamber, 100 g of polypropylene, previously dried during 4 hours at 105° C are introduced. Using a rotor blade speed of 5500 rpm the polymer is preheated until a temperature of 160° C is reached. At this point the rotor blades of the thermokinetic mixer are stopped and 33.3 g of kraft lignin, previously dried during 4 hours at 105° C, are then added. This operation has to be accomplished in a time shorter than 10 s to avoid solidification of the polymer in the mixing chamber. The thermokinetic mixer is turned on again at a rotor blade speed of 3700 rpm until a temperature of 150° C is reached and then the material is discharged. The obtained softened mass is submitted to a calendering process so that the material solidify in a less than 5 mm thick sheet that permits its subsequent grinding in a blade mill to obtain pellets of a size ranging from 0 to 8 mm which make them capable of injection molding. After injection molding at a temperature of 200° C, at an injection pressure of 71 MPa and with a cooling time of 25 s in a mold at 35° C, a material with the following properties is obtained:
- Tensile modulus of elasticity:: 0.73 GPa
- Tensile strength:: 1 5.8 MPa
- Flexural modulus of elasticity:: 1.11 GPa
- Notched impact energy:: 25.9 J/m
- Heat deflection temperature:: 45° C
- Softening temperature VICAT:: 71° C
- Rockwell hardness:: HRR9
- Density:: 1.032 g/cm³.

### Example 8: High density polyethylene/50% lignin composite material.

By following the same procedure described in Example 7, 100 g of kraft lignin are added instead of 33.3 g. After injection molding at a temperature of 200° C, at an injection pressure of 102 MPa and 25 s of cooling time in a mold at 35° C, a material with the following main properties is obtained:
- Tensile modulus of elasticity:: 1.08 GPa
- Tensile strength:: 12.9 MPa
- Flexural modulus of elasticity:: 1.85 GPa
- Flexural strength:: 20.4 MPa
- Notched impact energy:: 17 J/m
- Heat deflection temperature:: 54° C
- Softening temperature VICAT:: 70° C
- Rockwell hardness:: HRR50
- Density:: 1.124 g/cm³.

### Example 9: High density polyethylene/25% lignin/1.5% E-43^{(R)} composite material.

By following the same procedure described in Example 7, 98 g of high density polyethylene and 2 g of *E-43*^{*(R)*} are added instead of 100 g of high density polyethylene. After injection molding at a temperature of 200° C, at an injection pressure of 75 MPa and 25 s of cooling time in a mold at 35° C, a material with the following main properties is obtained:
- Tensile modulus of elasticity:: 0.69 GPa
- Tensile strength:: 17.6 MPa
- Flexural modulus of elasticity:: 1.1 2 GPa
- Notched impact energy:: 22.9 J/m
- Heat deflection temperature:: 42° C
- Softening temperature VICAT:: 72° C
- Rockwell hardness:: HRR27
- Density:: 1.032 g/cm³.

### Example 10: High density polyethylene /50% lignin/1.5% E-43^{(R)} composite material.

By following the same procedure described in Example 7, 96.7 g of high density polyethylene and 3.3 g of *E-43*^{*(R)*} are added instead of 100 g of high density polyethylene, and 100 g of lignin instead of 33.3 g. After injection molding at a temperature of 200° C, at an injection pressure of 98 MPa and 25 s of cooling time in a mold at 35° C, a material with the following main properties is obtained:
- Tensile modulus of elasticity:: 1.05 GPa
- Tensile strength:: 14.5 MPa
- Flexural modulus of elasticity:: 1.79 GPa
- Flexural strength:: 22.5 MPa
- Notched impact energy:: 13.2 J/m
- Heat deflection temperature:: 53° C
- Softening temperature VICAT:: 72° C
- Rockwell hardness:: HRR57
- Density:: 1.124 g/cm³.

### Example 11: High density polyethylene/25% lignin/1.5% G-3002^{(R)} composite material.

By following the same procedure described in Example 7, 98 g of high density polyethylene and 2 g of *G-3002*^{*(R)*} are added instead of 100 g of high density polyethylene. After injection molding at a temperature of 200° C, at an injection pressure of 73 MPa and 25 s of cooling time in a mold at 35° C, a material with the following main properties is obtained:
- Tensile modulus of elasticity:: 0.70 GPa
- Tensile strength:: 19.1 MPa
- Flexural modulus of elasticity:: 1.11 GPa
- Notched impact energy:: 23.2 J/m
- Heat deflection temperature:: 42° C
- Softening temperature VICAT:: 72° C
- Rockwell hardness:: HRR24
- Density:: 1.032 g/cm³.

### Example 12: High density polyethylene/50% lignin/1.5% G-3002^{(R)} composite material.

By following the same procedure described in Example 7, 96.7 g of high density polyethylene and 3.3 g of *G-3002*^{*(R)*} are added instead of 100 g of high density polyethylene, and 100 g of lignin instead of 33.3 g. After injection molding at a temperature of 200° C, at an injection pressure of 98 MPa and 25 s of cooling time in a mold at 35° C, a material with the following main properties is obtained:
- Tensile modulus of elasticity:: 1.02 GPa
- Tensile strength:: 18.6 MPa
- Flexural modulus of elasticity:: 1.83 GPa
- Flexural strength:: 27.9 MPa
- Notched impact energy:: 13.8 J/m
- Heat deflection temperature:: 50° C
- Softening temperature VICAT:: 74° C
- Rockwell hardness:: HRR54
- Density:: 1.124 g/cm³.

## Claims

1. Process for the obtention of composite materials consisting of thermoplastic and lignin, in a thermokinetic mixer in minimum thermal degradation conditions, characterized in that the process is carried out in two stages:
- First stage: The polymer is preheated until its softening or melting,
- Second stage: Lignin is added to the softened polymer and it is mixed with it until the discharge temperature, determined for each type of composite, is reached.

2. Process, according to claim 1, wherein the preheating temperature of the thermoplastic polymer must be higher than its melting temperature but should not be higher than 200° C.

3. Process, according to the preceding claims, wherein the discharge temperature of the mixing stage of the compounding process of the composite may not be higher than the melting temperature of the polymer and never must be higher than 180° C.

4. Process, according to the preceding claims, wherein the coupling agents used, belonging to the matrix modifiers type, are added to the polymer before the preheating stage.

5. A process, according to the preceding claims, wherein the additional additives used to improve the composite properties are added to the polymer before the preheating stage.

6. A process, according to the preceding claims, wherein the material obtained therefrom may be submitted to a subsequent molding stage in order to obtain articles or molded parts of the composite material.

7. A process, according to claim 6, wherein the subsequent molding stage may be by compression, injection, thermoforming or extrusion.

8. Formulations for the obtention of composite materials consisting of thermoplastic and lignin, wherein the thermoplastic polymer used as matrix is polypropylene, high density polyethylene, low density polyethylene, polyvinyl chloride or polystyrene, anyone of them original or recycled.

9. Formulations, according to the preceding claims, wherein lignin used as filler is lignin coming from alkaline pulping processes of cellulose pulp production, lignosulfonates coming from acid pulping process of cellulose pulp production or organosolv lignins, including lignins generated in the cellulose pulping processes based in the use of alcohols -ethanol or ethanol- as delignificant agents.

10. Formulations, according to the preceding claims, wherein the percentages of lignin used as filler range from 10 to 75% by weight.

11. Formulations, according to the preceding claims, wherein the percentages of coupling agents and other additives used to improve the composite properties are lower than 10%, by weight.

12. Formulations, according to the preceding claims, wherein as coupling agents may contain maleated polypropylene, or the commercially available maleated polypropylenes *E-43*^{*(R)*} or *G-3002*^{*(R)*}, in percentages lower than 10% by weight of the composite material.
